# EUROPEAN PATENT SPECIFICATION

(11) **EP 2 846 041 B1**
(45) Date of publication and mention of the grant of the patent: **17.01.2018**
(21) Application number: 13183404.6
(22) Date of filing: 06.09.2013
(51) Int. Cl.: F03D 13/10, F03D 13/20, E04H 12/12, E04H 12/20, E04H 12/34, E04H 12/08

(54) **Retrofitted wind turbine installation**
Nachgerüstete Windturbineninstallation
Installation d'éolienne rénovée

(43) Date of publication of application: 11.03.2015
(73) Proprietor: youWINenergy GmbH, 26135 Oldenburg (DE)
(72) Inventor: Rohden, Rolf, 26607 Aurich (DE)
(74) Representative: Alt, Michael

(56) References cited:
- WO-A1-2008/104837
- WO-A1-2010/103114
- WO-A1-2011/058158
- WO-A1-2012/038487
- WO-A1-2014/033332
- DE-A1-102011 010 417
- FR-A- 927 829
- G.F Bakema ET AL: "Re-powering of wind farms in practice" In: "European Wind Energy Conference and Exhibition 2006, EWEC 2006", 1 January 2006 (2006-01-01), XP055097838, ISBN: 978-1-62-276467-9 vol. 1, pages 29-35, * pages 4-5 *
- "MWPS Currently Available Second Hand Wind Turbines", , 1 November 2012 (2012-11-01), pages 1-4, XP055097581, Retrieved from the Internet: URL:http://www.docstoc.com/docs/145755817/ MWPS-Second-Hand-Wind-Turbines-Power-Plant s-web-version-November-2012 [retrieved on 2014-01-21]

## Description

### BACKGROUND

The present invention relates generally to a retrofitted wind turbine installation as well as to a method for retrofitting of an existing wind turbine installation.

Modern day wind turbines are usually large in size, as they are to generate power in the order of a few hundreds of kilowatts to a few megawatts. One of the important factors determining the capability and the capacity of a wind turbine to generate power is the height of the supporting structure, for example, the tower, used for the wind turbine. Taller towers allow the wind turbine to capture more wind power at higher elevations, and thereby resulting in more power generation. Furthermore, for larger capacity wind turbines higher towers would also be required. Depending on the power requirement, the tower height can be 100 m or more.

WO2012/038487 discloses a retrofitted wind turbine installation.

DE102011010417A1 and WO2014/033332 disclose wind turbine concrete towers comprising supporting means.

### SUMMARY

The height of the tower is dependent on a variety of considerations. For example, it is conventionally understood that the energy capture efficiency of a wind turbine increases if the height at which the wind turbine is positioned is also increased. However, the height of the tower for such wind turbines is decided based on the economics of such tower arrangements. More specifically, the extent of the kinetic energy of the wind captured can be enhanced if the height of the tower is increased; however, deploying a taller wind tower would bear extra material costs as well as assembling costs. Since the cost of tower constitute roughly around one-third of the total wind turbine installation costs, the cost of a taller tower built from additional material are likely to be high thereby offsetting any cost advantage of generating power from such wind turbine installations.

Furthermore, taller installations also experience a variety of challenges. As is conventionally understood, wind turbine towers experience different types of loads. During operation, besides static loads like the gross weight of the wind turbine, various dynamic loads may also come into effect. Examples of such loads include bending moments arising due to the resistance which the installation offers to the incoming wind flow, or bending moments arising due to the rotation of the blades of the wind turbine. As would be conventionally understood, the static and dynamic loads including bending moments experienced by the tower of an operational wind turbine are cumulatively more on the lower portion compared to the upper one. To account for such loads, the tower of wind turbine installations may be tapered, with the outer diameter of the tower for such wind turbine installations gradually decreasing with the height of the tower.

Such problem may account for larger as well as smaller wind turbines. As would be also be mentioned later, for larger turbines, the bottom portion of the tower would also have to be thicker and therefore would also require more material to fabricate. As would be known to a person skilled in the art, the dimensions of base or the bottom of the tower may be based on an expected magnitude of the bending moments. The broad base of the tower for the wind turbine installations offers the necessary footprint to provide the rigid support to counter the bending moments and other loads.

For smaller capacity wind turbines, the efficiency of the wind turbine is dependent on the extent of the kinetic energy captured from the incoming wind flow. One method involves extending the height at which the nacelle is placed relative to the ground. In such cases, as the tower height increases, the bending moments acting on the tower base also increase. In order to balance such loads, towers with broader base would also be required.

The invention is defined in the appended claims.

According to the basic concept of the present subject-matter a retrofitted wind turbine installation comprising a newly constructed tower assembly and elements demounted from an existing wind turbine installation, is disclosed. Accordingly, it is possible to provide a wind turbine installation which comprises a newly constructed tower assembly as well as elements used in an existing wind turbine installation. Hence, it is possible to upgrade existing wind turbine installations by using elements of the existing wind turbine installation and mounting elements of the existing wind turbine installation on a new tower assembly. This makes it possible to use existing wind turbines at greater heights, for instance.

According to an embodiment of the present subject-matter, the elements demounted from an existing wind turbine installation comprise at least a nacelle which accommodates a power generator coupled to a rotor hub carrying a blade assembly. Accordingly, it is possible to reuse elements of a wind turbine installation in combination with an enhanced new tower assembly as described heretofore in order to provide a retrofitted wind turbine installation, thereby reducing use of additional materials for erecting taller wind turbine towers.

According to yet another embodiment of the present subject-matter, the elements demounted from an existing wind turbine installation further comprise a part of an existing tower assembly of said existing wind turbine installation. Accordingly, the elements demounted from an existing wind turbine installation not only comprise the nacelle which accommodates a power generator coupled to a rotor hub carrying a blade assembly, but also at least a part of an existing tower assembly on which the nacelle is mounted. Accordingly, it is possible to mount a portion or even the complete existing wind turbine installation comprising the nacelle and the existing tower assembly on a new tower assembly, as described heretofore. Hence, it is possible to mount the existing wind turbine installation at a greater height so that a more efficient operation of the wind turbine is possible. For that purpose, a portion of the new tower assembly can be constructed in such a manner that the diameter of the top portion of the new tower assembly corresponds to a diameter of the existing tower assembly on which the nacelle was mounted on the existing wind turbine installation in case only the nacelle of an existing wind turbine installation is mounted on the newly constructed tower assembly

According to yet another embodiment of the present subject-matter, the retrofitted wind turbine installation further comprises one or more adapting means which are provided for connecting said elements to said new tower assembly. Such an adapting means may be used to compensate for structural differences between the new tower assembly as described heretofore and the elements demounted from an existing wind turbine installation. In other words, the one or more adapting means serve as a transition segment enabling the mounting of the elements on the newly formed tower assembly.

According to a further embodiment of the present subject-matter, the newly constructed tower assembly of the retrofitted wind turbine installation comprises a concrete tower portion having two or more concrete tower segments arranged upon each other, wherein each of said two of more tower segments is a hollow segment having a constant outer diameter in its longitudinal direction. However, as would be appreciated by a person skilled in the art, segments having a variable outer diameter would also be within the scope of the present subject matter. The new tower assembly further comprises one or more supporting means capable of receiving bending loads from said concrete tower portion, wherein said one or more supporting means are connected to said concrete tower portion at a predetermined height, and is fixed to the ground at a predetermined distance away from the concrete tower portion. In this connection, supporting means is to be understood as any means which is able to receive bending loads or to apply a counter force acting against the bending loads. Accordingly, any suitable means stabilizing the tower assembly shall fall under the term supporting means. Accordingly, it is possible to reduce bending loads acting on the concrete tower portion of the tower assembly. Therefore, the stability and rigidity of the concrete tower portion is enhanced. As the bending loads are transferred from the tower through the supporting means, to the ground, the lower portions of the concrete tower portions are thus less susceptible to such bending loads. Since the bending moments reduce along the longitudinal direction towards the tower base, the tower segments can be so configured such that the average wall thickness a concrete tower segment is different from the average wall thickness of the upper adjacent concrete tower segment.

According to the present subject-matter, each of the two or more concrete tower segments is preferably a hollow segment which advantageously has a constant outer diameter in its longitudinal direction. Therefore, the two or more concrete tower segments have a simple construction and can be easily manufactured.

In order to achieve such a beneficial effect, the one or more supporting means are connected to the concrete tower portion at a predetermined height and are fixed to the ground at a predetermined distance away from the concrete tower portion. The predetermined height and the predetermined distance are preferably set in such a manner that the one or more supporting means are able to suitably transfer bending loads received from the concrete tower portion to the ground. Accordingly, the rigidity of the tower assembly is further enhanced.

The tower assembly of the retrofitted wind turbine installation according to the present subject-matter comprises two or more concrete tower segments arranged upon each other and forming a concrete tower portion wherein each of the concrete tower segments has a constant outer diameter in its longitudinal direction. By using such two or more concrete tower segments, it is possible to form a concrete tower portion with concrete tower segments being designed in line with upper limits for load, sizes and weights imposed by different jurisdictions. Accordingly, the transportability is enhanced.

Furthermore, bending loads acting on the lower portion of the concrete tower portion are reduced. Therefore, according to the present subject-matter, the wall thickness of the lower one of two adjacent concrete tower segments is different from the wall thickness of the upper one of the two adjacent concrete tower segments. In other words, the wall thickness can be reduced from the top to the bottom of the concrete tower portion.

According to an embodiment of the present invention, the average wall thickness of a concrete tower segment of said two or more concrete tower segments is smaller than the average wall thickness of an adjacent upper concrete tower segment. As already described above, it is possible to reduce the wall thickness due to the provision of the supporting means which reduce the bending moments acting on certain portions of the tower. In this connection, average wall thickness shall also encompass constructions in which the wall thickness is not constant in the longitudinal direction of a concrete tower segment. For instance, end portions of the respective concrete tower segments may comprise a different wall thickness which accounts for a better load distribution between two adjacent concrete tower segments or a better mountability to another tower segment.

According to a further embodiment of the present subject-matter, the two or more concrete tower segments have identical outer diameters. Using two or more concrete tower segments having identical outer diameters has the advantage that the concrete tower portion has a uniform shape.

According to yet another embodiment of the present subject-matter, the tower assembly of the retrofitted wind turbine installation comprises one or more first transition segments for connecting one of said two or more concrete tower segments with another one of said two or more concrete tower segments. By using a first transition segment for connecting two concrete tower segments, it is possible to provide a reliable and simple connection. The first transition segment is adapted to be suitably connected to two adjacent concrete tower segments. Such a connection is not only beneficial from the viewpoint of a reliable connection between two concrete tower segments, but also from the viewpoint of an easy to achieve and cost-efficient connections between the various concrete tower segments.

According to yet another embodiment, said one or more first transition segments comprise a U-shaped groove for accommodating an axial end of the upper one of two adjacent concrete tower segments and an L-shaped flange connectible to the lower one of the two adjacent concrete tower segments. By using a U-shaped groove for accommodating an axial end of the upper one of two adjacent concrete tower segments, the mountability of the upper one of two adjacent concrete tower segments is enhanced because the upper one of the two adjacent concrete tower segments simply has to be inserted in the U-shaped groove. Accordingly, the U-shaped groove also serves as a mounting guide. The L-shaped flange is preferably constructed in such a manner that that one leg of the L-shape protrudes in a downward direction when the first transition segment is mounted on a concrete tower segment. Preferably, the free end of the protruding leg of the L-shaped flange is in contact with the lower one of the two adjacent concrete tower segments. Accordingly, it is possible to provide a step-wise increase of the inner diameter from one concrete tower segment to the other.

According to yet another embodiment of the present subject-matter, the tower assembly of the retrofitted wind turbine installation further comprises a steel tower portion comprising one or more steel tower segments positioned above the concrete tower portion of the new tower assembly. As per the present embodiment, the existing elements of existing wind turbine installation can be positioned on top of the steel tower portion. Accordingly, a hybrid tower assembly is achieved comprising a concrete tower portion and a steel tower portion. With such a construction, a tower assembly having a high structural integrity and a simple construction is provided.

According to yet another embodiment of the present subject-matter, said one or more steel tower segments are circular in cross section and have a constant outer diameter in the longitudinal direction. Accordingly, a hybrid tower assembly is provided with at least one steel tower segment having an outer shape in the form of a right cylinder. Hence, a steel tower segment which has a simplified construction and can be manufactured with ease is used for the construction of the upper part of the new tower assembly. Therefore, the costs for the tower assembly are reduced.

According to yet another embodiment of the present subject-matter, said outer diameter of said one or more steel tower segments is identical to the outer diameter of said uppermost of said two or more concrete tower segments. Accordingly, the outer diameter of the one or more steel tower segments is the same as the outer diameter of the uppermost of the two or more concrete tower segments. Furthermore, in case all tower segments have the same outer diameter, a uniform tower assembly is achieved.

According to yet another embodiment of the present subject-matter, said outer diameter of said one or more steel tower segments is smaller than the outer diameter of said uppermost of said two or more concrete tower segments. With such an arrangement, it is possible to reduce the outer diameter of the tower assembly towards the top in a step-wise manner.

According to yet another embodiment of the present subject-matter, the new tower assembly further comprises a second transition segment for connecting the uppermost concrete tower segment with the lowermost steel tower segment of the steel tower portion. By using such a second transition segment for connecting the concrete tower segment with a steel tower segment, it is possible to establish a reliable connection between the concrete tower portion and the steel tower portion.

According to yet another embodiment of the present subject-matter, the second transition segment comprises a U-shaped groove for accommodating an axial end of the uppermost concrete tower segment and a T-shaped or L-shaped flange connectable to said steel tower portion. By providing a U-shaped groove, it is possible to reliably accommodate the axial end of the uppermost concrete tower segment. Furthermore, the mountability of the second transition segment on the concrete tower segment is enhanced. By using a T-shaped flange as the connection to the steel tower portion, it is possible to connect a steel tower segment having a reduced outer diameter compared to the uppermost concrete tower segment on the concrete tower portion. In case the steel tower segment being connected to the uppermost concrete tower segment has an outer diameter which is identical to the outer diameter of the concrete tower segment, it is beneficial to use the L-shaped flange constructed in such a manner, that a leg of the L-shaped projects from the second transition segment towards an axial end of the lowermost steel tower segment. Accordingly, a second transition segment provides an easy and reliable connection between the uppermost concrete tower segment and the lowermost steel tower segment.

According to yet another embodiment of the present subject-matter, the new tower assembly further comprises one or more connecting means provided on the outer peripheral surface of one or more of said transition segments for connecting said one or more supporting means to said one or more of said transition segments. By providing one or more connecting means on the outer peripheral surface of one or more of said transition segments, it is possible to connect one or more supporting means to one or more of the transition segments in order to enhance the rigidity of the concrete tower portion of the new tower assembly. Preferably, at least the second transition segment for connecting the uppermost concrete tower segment with the lowermost steel tower segment comprises said connecting means in order to enhance the rigidity of a concrete tower portion. Providing the connecting means on the outer peripheral surface of one or more said transition segments has the advantage that such a connecting means does not have to be provided on the outer peripheral surface of the concrete tower segments. Therefore, the structural integrity of the concrete tower segments is maintained. Furthermore, contrary to constructions of concrete towers in which the rigidity is enhanced through pre-stressed cables which run within the tower wall, the need for pre-stressed cables is also avoided as the same effect can be accomplished through the supporting means.

According to yet another embodiment of the present subject-matter, three or more connecting means are equidistantly provided on one or more of said first and second transition segments. By equidistantly providing three or more connecting means on one or more of the first and second transition segments the stability of the new tower assembly is increased. Preferably, the three or more connecting means are provided on the outer circumference of the one or more of said first and second transition segments.

According to yet another embodiment of the present subject-matter, said one or more supporting means is a guy wire or a guy tube or a combination thereof. By using a guy wire or a guy tube or a combination thereof as supporting means, a cheap and easy to handle supporting means is realized.

As already described above, it is possible to provide the nacelle demounted from an existing wind turbine installation on the top of the newly erected tower assembly of the retrofitted wind turbine installation. Preferably, the steel tower portion of the new tower assembly carries the elements demounted from an existing wind turbine installation. For that purpose, the steel tower portion can be constructed in such a manner that the diameter of the steel tower portion at its top end corresponds to a diameter of the new tower assembly on which the nacelle was mounted on the existing wind turbine installation in case only the nacelle of an existing wind turbine installation is mounted on the newly constructed tower assembly. In case a part of the existing tower assembly of the existing wind turbine installation is to be mounted on the new tower assembly as described heretofore, it is advantageous to use a steel tower portion which has an upper end having a diameter which corresponds to the diameter of the lower end of the existing tower assembly since the material required for manufacturing said steel tower portion would be less, as opposed to the case where the dimensions of the steel tower portions matched the dimensions of the lower concrete tower portions. Furthermore, it is also possible to mount the tower of the existing wind turbine installation on which the nacelle is mounted directly on the concrete tower portion so that the tower of the existing wind turbine installation forms a steel tower segment of the newly constructed tower assembly.

According to the basic concept of the present subject-matter, a method for retrofitting of an existing wind turbine installation is provided and comprises the steps of providing a new tower assembly, demounting one or more elements from an existing wind turbine installation and mounting said one or more elements from said existing wind turbine installation on said new tower assembly.

According to an embodiment of the present subject-matter, in the step of providing a new tower assembly, the new tower assembly is constructed as it is described above.

According to yet another embodiment of the present subject-matter, in said step of demounting one or more elements from an existing wind turbine installation at least a nacelle which accommodates a power generator coupled to a rotor hub carrying a blade assembly is demounted from said existing wind turbine. Accordingly, the nacelle of the existing wind turbine installation can be positioned at a greater height as compared to the height at which the nacelle was mounted in the existing wind turbine installation. Since the wind flow increases with increasing height, placing said nacelle which accommodates a power generator coupled to a rotor hub carrying a blade assembly at such an increased height will increase the proportion of the wind flow incident upon the rotor blade and consequently the energy output efficiency of the wind turbine is increased.

According to yet another embodiment of the present subject-matter, at least a part of an existing tower assembly of said existing wind turbine installation is demounted from said existing wind turbine during said step of demounting one or more elements from said existing wind turbine installation. Accordingly, a portion of the original tower is used for the construction of the new tower of the retrofitted wind turbine installation.

According to yet another embodiment of the present subject-matter, the method for retrofitting of an existing wind turbine installation further comprises the step of adapting the new tower assembly so that said one or more elements are mountable thereon. For example, it is possible to design the steel tower portion in such a manner that the upper part of the steel tower portion to be connected to the elements demounted from the existing wind turbine installation can be easily connected to the elements.

According to yet another embodiment of the present subject-matter, an adapting means for connecting the one or more elements to said new tower assembly is provided on said new tower assembly as described heretofore in the step of adapting the new tower assembly.

### BRIEF DESCRIPTION OF THE DRAWINGS

Fig. 1 shows a new tower assembly of retrofitted wind turbine installation for supporting a wind turbine according to an embodiment of the present subject-matter in a side view.
Fig. 2 shows a retrofitted wind turbine installation according to an embodiment of the present subject-matter in a side view.
Fig. 3 shows the new tower assembly shown in Fig. 1 and a corresponding moment diagram showing a moment distribution along the tower assembly.
Fig. 4 shows a transition segment according to the embodiment of the present subject-matter in a cross sectional view.
Fig. 5 shows a further transition segment according to a modification of the embodiment of the present subject-matter in a cross sectional view.
Fig. 6 shows a top view of the new tower assembly shown in Fig. 1
Fig. 7 shows end portions of two concrete tower segments according to a modification of the embodiment of the present subject-matter in a cross sectional view.
Fig. 8 shows a new tower assembly according to a modification of the embodiment of the present subject-matter in a side view.
Fig. 9 shows a further transition segment according to a modification of the embodiment of the present subject-matter in a cross sectional view.

In the following, an embodiment of the present subject-matter is explained based on the drawings. Further alternative modifications of the embodiments which are at least in part not illustrated are specified in the following description as well.

### DESCRIPTION OF THE EMBODIMENT

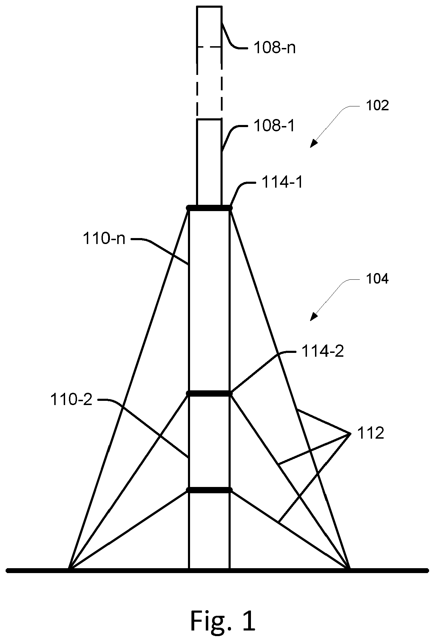

First of all, a new tower assembly of a retrofitted wind turbine installation according to an embodiment is described with reference to Fig. 1. In the following, the elements forming the new tower assembly will be explained first.

The new tower assembly shown in Fig. 1 comprises multiple tower segments arranged one upon the other. More precisely, the new tower assembly comprises three concrete tower segments arranged in a lower portion of the new tower assembly and multiple steel tower segments arranged in the upper portion of the new tower assembly. The lower tower portion comprising the concrete tower segments is also referred to as concrete tower portion 104 whereas the upper portion of the new tower assembly comprising the steel tower segments is also referred to as steel tower portion 102 in the following.

As is shown in Fig. 1, the uppermost concrete tower segment of the concrete tower portion 104 is denoted with reference sign 110-n which means that an arbitrary number of concrete tower segments 110-1 to 110-n can be selected. In the present embodiment as shown in Fig. 1, three concrete tower segments 110-1, 110-2, ..., 110-n are shown. The concrete tower segments 110-1, 110-2, ..., 110-n are arranged upon each other in order to form the concrete tower portion 104. As is also obvious from Fig. 1, the outer diameter of the concrete tower segments 110-1, 110-2, ..., 110-n is constant in the longitudinal direction of each concrete tower segment. Furthermore, the outer diameters of the concrete tower segments 110-1, 110-2, 110-n are the same. Hence, the concrete tower segments 110-1, 110-2, ..., 110-n form a concrete tower portion 104 having a substantially constant outer diameter.

According to the present embodiment, the concrete tower segments 110-1, 110-2, 110-n have a tubular shape. Furthermore, the concrete tower segments 110-1, 110-2, 110-n have different wall thicknesses. More precisely, according to the present embodiment, the wall thickness of the concrete tower segments 110-1, 110-2, 110-n is reduced from concrete tower segment to concrete tower segment from the top of the concrete tower portion 104 to its bottom. According to the present embodiment, the concrete tower segments 110-1, 110-2, 110-n each have different but constant wall thickness leading to a construction in which the concrete tower segments 110-1, 110-2, 110-n each have a constant inner diameter in the longitudinal direction. However, as already described above, the wall thickness of the concrete tower segments 110-1, 110-2, 110-n is decreased from the tip of the concrete tower portion 104 to its bottom. That is, according to the present embodiment, the uppermost concrete tower segment 110-n has the largest wall thickness whereas the lowermost concrete tower segment 110-1 has the smallest wall thickness. Since the outer diameters of the concrete tower portions 110-1, 110-2, 110-n are identical, the inner diameters of the concrete tower segments 110-1, 110-2, 110-n are increased from the uppermost concrete tower segment 110-n to the lowermost concrete tower segment 110-1 in order to achieve a corresponding reduction in the wall thickness.

As is further shown in Fig. 1, the concrete tower segments 110-1, 110-2, 110-n are connected to each other by means of transition segments 114. In detail, according to the present embodiment, the lowermost concrete tower segment 110-1 is connected to the intermediate concrete tower segment 110-2 by means of a first transition segment 114-2 and the intermediate concrete tower segment 110-2 is connected to the uppermost concrete tower segment 110-n by means of another first transition segment 114-2. Accordingly, by mounting the three concrete tower segments 110-1, 110-2, 110-n upon each other using the transition segments 114-1, 114-2, the concrete tower portion 104 is provided.

As is further shown in Fig. 1, the new tower assembly comprises multiple steel tower segments 108-1 to 108-n which in combination form the steel tower portion 102. As is indicated by the dotted lines in the steel tower portion 102, an arbitrary number of steel tower segments can be provided between the uppermost steel tower segment 108-n and the lowermost steel tower segment 108-1. It is also possible to directly mount the uppermost steel tower segment 108-n on the lowermost steel tower segment 108-1 resulting in a steel tower portion 102 having only two steel tower segments. Furthermore, in an alternative, it is also possible to provide a steel tower portion comprising only one steel tower segment.

Similar to the concrete tower segments 110-1, 110-2, 110-n, each steel tower segment 108-1, 108-n has a constant outer diameter in the longitudinal direction, throughout their respective lengths. Furthermore, the steel tower segments 108-1, 108-n have identical outer diameters. This results in a construction in which the steel tower portion 102 has a constant outer diameter in the longitudinal direction. As can be seen from Fig. 1, the outer diameters of the steel tower segments 108-1, 108-n are smaller than the outer diameters of the concrete tower segments 110-1, 110-2, 110-n resulting in a tower assembly having a steel tower portion 102 with a smaller outer diameter than the diameter of the concrete tower portion 104. In other words, the diameter of the tower assembly is reduced from the concrete tower portion 104 to the steel tower portion 102. This construction has been chosen due to the fact that the loading on the tower assembly decreases with the increase in height. Accordingly, it is possible to use a steel tower portion as the upper portion of the tower assembly because it is not necessary to use concrete tower segments being able to bear greater loads up to the end of the tower assembly.

The steel tower segments 108-1, 108-n have a substantially constant inner diameters along the entire length of each steel tower segment 108-1, 108-n. Accordingly, the wall thickness of each steel tower segment 108-1, 108-n is also substantially constant over the entire length of the respective steel tower segment 108-1, 108-n. Thus, a steel tower portion 102 having a constant wall thickness is provided. It is, however, also possible to use steel tower segments having different wall thicknesses. For example, it is possible to choose the wall thickness of the steel tower segments so that the uppermost steel tower segment has the smallest wall thickness and the lowermost steel tower segment has the largest wall thickness. Of course, such a change in the wall thickness from steel tower segment to steel tower segment can be combined with a reduction in the outer diameter of the steel tower segments from the top of the steel tower portion to its bottom.

As is shown in Fig. 1, the concrete tower portion 104 is connected to the steel tower portion 102 by means of a second transition segment 114-1. The transition segment 114-1 is suitably adapted to be connected to tower portions having different outer and inner diameters.

The new tower assembly is fixed on the ground 106. For that purpose, a base member is provided on the ground 106, which is adapted to provide a sufficient support for the tower assembly.

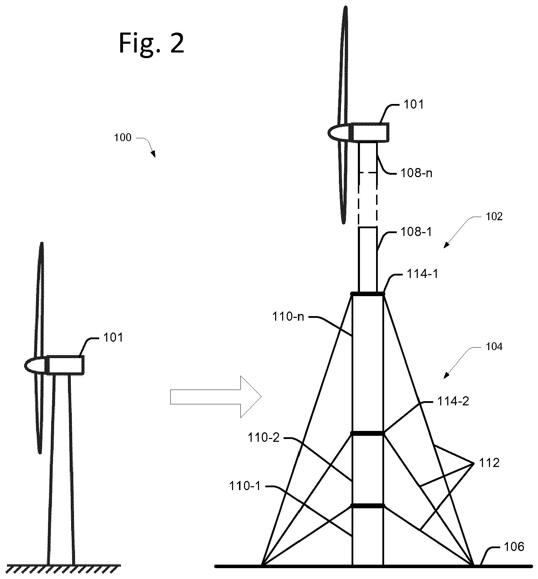

Mountable to the top of the new tower assembly, i.e., to the top of the steel power portion 102 is a nacelle comprising a rotor hub carrying a blade assembly and a power generator to which the blade assembly is connected. A tower assembly 100 on which such a nacelle 101 is mounted is shown in Fig. 2, for instance.

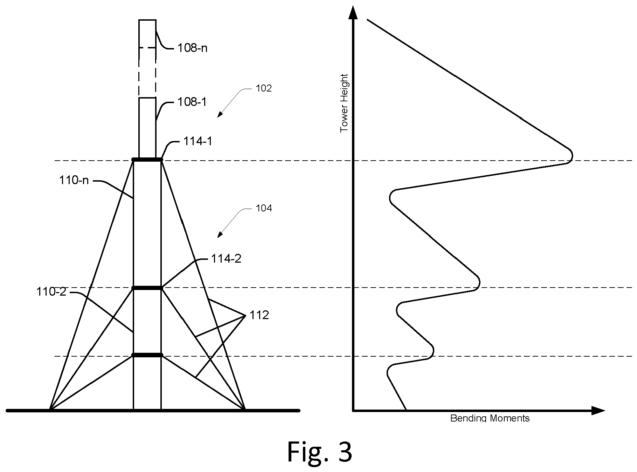

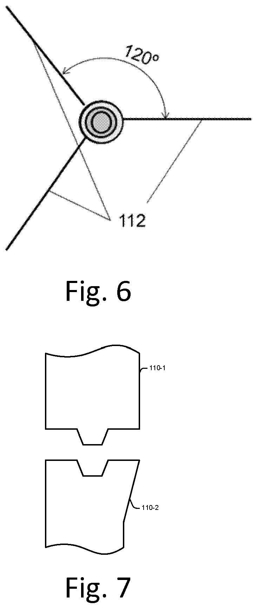

As is shown in Fig. 1, 2 and 3, multiple supporting means 112 are connected to the tower assembly 100 at the transition segments 114-1, 114-2. Furthermore, the other ends of the supporting means 112 are connected to the ground 106. A supporting means 112 can be a guy wire or a guy tube or a combination thereof, for instance. According to the present embodiment, the tower assembly 100 is provided with three supporting means 112 on each transition segment in order to additionally stabilize the tower assembly 100. According to the embodiment, three guy wires 112 are fastened on each transition segment 114-1, 114-2. The other ends of the guy wires 112 are fixed on the ground 106 by means of an anchor, for instance. As can be seen from Fig. 6, which is a top view of the tower assembly 100 shown in Fig. 1 and 3, the guy wires 112 are provided at the transition segments 114-1, 1142- at equal distance in the circumferential direction.

As is shown in Fig. 3, the guy wires 112 have the ability to receive bending loads from the tower assembly 100 and transfer these loads to the ground. Accordingly, as is shown in the moment diagram of Fig. 3, the bending moments acting on the tower can be reduced. As is shown in the diagram of Fig. 3, a load applied on the top portion of the tower assembly 100 in the horizontal direction causes a bending moment in the tower assembly 100. This bending moment increases with an increase of a distance from the load application point, i.e., the top end of the tower assembly 100. Accordingly, in the present case, the bending moment increases with an increase of a distance from the top portion of the tower assembly 100. As is shown in the diagram, the increase of the bending moments is counteracted by the guy wires 112 connected to the transition segments 114-1, 114-2. Therefore, in the diagram shown in Fig. 3, the bending moments increase up to a point at which the guy wires are fixed on the transition segments. In detail, going from the top to the bottom of the tower assembly 100, the bending moments first increase with an increase of the distance from the top portion of the steel tower portion 102. The bending moments increase linearly. The maximum value of the bending moments is reached at a height of the tower assembly 100 where the transition segment 114-1 connecting the steel tower portion 102 and the concrete tower portion 104 is provided. Due to the bending loads received by the guy wires 112 at this height, the bending moments are reduced to an interim minimum value. After having reached the interim minimum value, the bending moments further increase up to the height of the tower assembly 100 at which the transition segment 114-2 being connected to further guy wires 112 is provided. Similar to the guy wires 112 connected to the uppermost transition segments 114-1, the guy wires 112 connected to the intermediate transition segment 114-2 receives bending loads from the tower assembly 100 leading to a reduction of the bending moments as is shown in the moment diagram. As one goes further down the tower assembly 100, a further increase of the bending moments is present until the height of the lowermost transition element is reached. As is described with respect to the other transition elements, three guy wires 112 are also connected to the lowermost transition segment leading to a further reduction of the bending moments. Accordingly, the tower assembly 100 is stabilized.

As is already described above, the concrete tower portion 104 and the steel tower portion 102 are connected to each other by means of the transition segment 114-1. In the tower assembly 100, this transition segment 114-1 connects the uppermost concrete tower segment 110-n with the lowermost steel tower segment 108-1 of the steel tower portion 102. In the following, this transition segment 114-1 is also referred to as second transition segment 114-1.

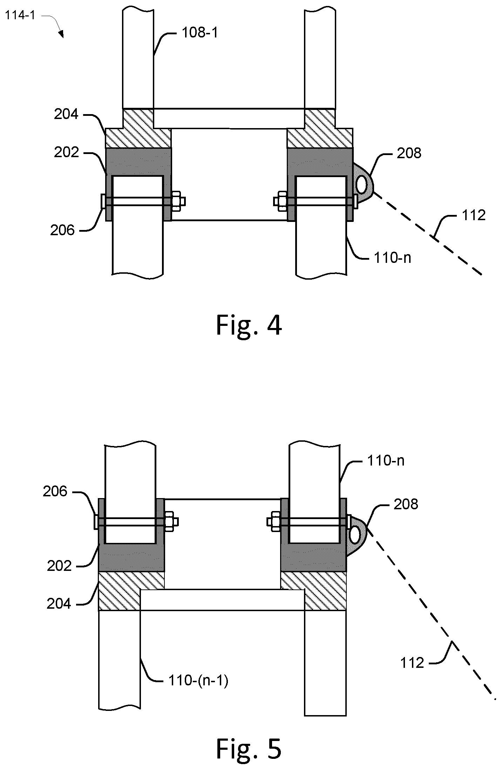

As is shown in Fig. 4, the second transition segment 114-1 connecting the lowermost steel tower portion 108-1 with the uppermost concrete tower portion 110-n has a ring like shape and is preferably made by steel or metal casting. According to the present embodiment the second transition segment 114-1 includes a U-shaped flange 202. In other words, a groove is provided which can receive an end of the uppermost concrete tower portion 110-n. For that purpose, the U-shaped flange 202 is oriented in the downward direction when the second transition segment 114-1 is mounted. Furthermore, the second transition segment 114-1 also includes a T-shaped flange 204 for bearing the steel tower portion 102. The lowermost steel power segment 108-1 is positioned on the T-shaped flange 204. The steel tower segment 108-1 is fixed on the T-shaped flange by means conventionally known in the art. By using a combination of a U-shaped flange and a T-shaped flange, it is possible to provide a transition from a specific wall thickness and/or another wall diameter of the concrete tower segment 110-n to another wall thickness and/or another wall diameter of the steel tower segment 108-1. Hence, in case the outer diameter of the steel tower segment 108-1 is smaller than the outer diameter of the uppermost concrete tower segment 110-n, this arrangement is suitable for such differences in the outer diameters. Accordingly, a tower assembly 100 is achieved which possesses a uniform outer profile throughout its lower concrete portion 104 and the upper steel tower portion 102 wherein the outer diameter of the steel tower portion 102 is smaller than the outer diameter of the concrete tower portion 104.

The construction of a transition segment 114-2 connecting two adjacent concrete tower segments according to the embodiment of the present subject-matter is described hereinafter. The transition segment 114-2 connecting two adjacent concrete tower segments is also referred to as first transition segment in the following. The first transition segment is constructed as a combination of an L-shaped flange and a U-shaped flange.

The U-shaped flange is adapted to accommodate an end portion of the upper one of the two adjacent concrete tower segments. Accordingly, when the transition segment is mounted in the tower assembly 100, the U-shaped flange is arranged to be directed in the vertical upper direction. As is further obvious from Fig. 5, the L-shaped flange is provided on a side of the first transition segment 114-2 which is opposite to the side on which a U-shaped flange is provided. The L-shaped flange is adapted to be connected with a lower one of the two adjacent concrete tower segments.

Furthermore, the L-shaped flange is provided in such a manner, that one leg protrudes from the transition segment 114-2 in the downward direction. When placed upon the lower concrete tower segment of the two adjacent concrete tower segments, the free end of the leg of the L-shaped flange is in contact with an upper end of the lower concrete tower portion of the two adjacent concrete tower portions. The L-shaped flange can be fixed on the upper end of the lower concrete tower portion of the two adjacent tower portions by any suitable means known in the art.

The L-shaped flange and the U-shaped flange are, in the present embodiment, suitably adapted so that the concrete tower segments having the same outer diameters can be connected to each other.

Furthermore, on the outer peripheral surface of the second transition segment 114-2 three connectors 208 are provided at equal distance in the circumferential direction. Only one connector 208 is shown in Fig. 5. A guy wire 112 is fixedly connected to the connector 208. Accordingly a new tower assembly having an enhanced rigidity is achieved.

As already describe above, Fig. 2 shows a wind turbine installation comprising a new tower assembly as described heretofore. According to the embodiment shown in this figure, the wind turbine installation is a retrofitted wind turbine installation. More precisely, the wind turbine installation comprises parts of an existing wind turbine installation which has been mounted onto a newly constructed tower assembly. Accordingly, the existing wind turbine installation is retrofitted by using specific parts of the existing wind turbine installation on a newly constructed tower assembly.

The process for retrofitting of the existing wind turbine installation is described in the following. An existing wind turbine installation is shown on the left side in Fig. 2. This wind turbine installation comprises a tower and a nacelle 101 which accommodates a power generator coupled to a rotor hub carrying a blade assembly.

The process of retrofitting of an existing wind turbine installation comprises essentially the steps of providing a new tower assembly, demounting one or more elements from the existing wind turbine installation and mounting the one or more elements from the existing wind turbine installation on the newly constructed tower assembly. Accordingly, in a first step, a new tower assembly as described with respect to Figs. 1 to 6 is provided. In this connection, it is beneficial if the erection site of the tower assembly is near the existing wind turbine installation so that elements to be used from said existing wind turbine installation can be easily transferred from the existing wind turbine installation onto the new tower assembly.

In a next step, one or more elements from the existing wind turbine installation are demounted. In the embodiment shown in Fig. 2, the nacelle 101 accommodating the power generator coupled to the rotor hub carrying the blade assembly is demounted from the tower of the existing wind turbine installation. After that, the nacelle 101 including the other elements described above is transferred from the tower of the existing wind turbine installation to the newly formed tower assembly 100 by means of a suitable lifting appliance such as a crane. Finally, the nacelle 101 is mounted on top of the newly formed tower assembly 100 so that a retrofitted wind turbine installation is achieved. Preferably, an adapting means is used to mount the elements of the existing wind turbine installation, i.e. the nacelle according to the present embodiment, on the new tower assembly.

### MODIFICATIONS

As is shown in the embodiment according to Fig. 2, only the nacelle 101 is demounted from the existing wind turbine installation and is mounted on a newly constructed tower assembly 100 in order to form the retrofitted wind turbine installation. However, it is also possible to demount the nacelle 101 along with at least a part of the existing tower from the existing wind turbine installation and to mount the assembly consisting of the nacelle 101 and the part of the existing tower on the newly formed tower assembly 100. In other words, a part of the existing tower can be used as the uppermost steel tower segment 108-n. It is even possible to mount the nacelle 101 together with the complete tower of the existing wind turbine installation on the newly formed tower assembly. Thus, the tower of the existing wind turbine installation may form the steel tower portion 102 of the new tower assembly 100.

As is described above with respect to Fig. 1, the concrete tower segments 110-1, 110-2, 110-n are connected to each other by means of transition segments in the embodiment described above. It is, however, to be mentioned that not all segments have to be connected by a transition segment. It is possible to provide such transition segments only where the supporting means, guy wires for instance, are to be attached on the concrete tower portion. In this connection, a further modification of the present embodiment is shown in Fig. 7. Here, a specific connection between the two adjacent concrete tower segments 110-1, 110-2 which does not involve transition segments is shown. According to the modification, each of the concrete tower segments can be provided with projections on the lower end and a cavity on the upper end. The shape of the projections and the cavity can be complementary. As a result of the complementary shape, the concrete tower segments can be assembled easier because the positioning of the concrete tower segments is enhanced. Furthermore, since the projection of an upper concrete tower segment is accommodated in the cavity of the lower concrete tower segment, a proper fitting of the two concrete tower segments is achieved. Preferably, the projections and the cavities can be tapered to allow for a better handling of lateral loads by the respective concrete tower segments.

According to the embodiment, the new tower assembly 100 comprises concrete tower segments having the same outer diameter. However, it is also possible to use concrete tower segments having a different outer diameter.

Fig. 5 shows a modification of the first transition segment 114-2 which is adapted to connect two concrete tower segments having a different wall thickness and different outer diameters. More precisely, according to the modification, the outer diameter of the upper concrete tower segment 110-n is slightly smaller than the outer diameter of the lower concrete tower segment 110-(n-1). The outer diameter of the L-shaped flange 204 and the outer diameter of the U-shaped flange are identical. Furthermore, the outer diameter of the L-shaped flange 204 is also identical to the outer diameter of the lower concrete tower segment of the two adjacent concrete tower segments. Accordingly, the transition from the outer surface of the lower concrete tower segment to the outer peripheral surface of the first transition segment 114-2 is uniform.

As is further shown in Fig. 5, the wall thickness of the lower concrete tower segment 110-(n-1) corresponds to the thickness of the leg of the L-shaped flange 204. Accordingly, when the transition segment 114-2 is mounted on the lower concrete tower segment 110-(n-1) a smooth transition from the lower concrete tower segment to the transition segment 114-2 is achieved. Also, the lower end of the upper concrete tower segment 110-n is accommodated in the U-shaped flange and is fixed thereto by means of a bolt 206.

According to the embodiment described above, the wall thickness of the concrete tower segments 110-1, 110-2, 110-n is reduced from concrete tower segment to concrete tower segment from the top of the concrete tower portion 104 to its bottom. However, a different arrangement with respect to the wall thickness is possible. Generally, only the lower portion of the concrete tower portion can be arranged with a successively reduced diameter. For instance, when going from the top to the bottom of the concrete tower portion, it is possible that the wall thickness is first increased from the top of the concrete tower portion towards a portion in the middle of the concrete tower portion and is than reduced successively from the middle portion to the lowermost portion of the concrete tower portion. Furthermore, the wall thickness does not have to change from each segment to an adjacent segment. It is also possible to provide a tower portion having one or more sections next to a wall thickness change position, in which adjacent concrete tower segments have the same wall thickness and, preferably, the same outer diameter. For example, an arrangement is possible in which the wall thickness is changed, preferably reduced, from an upper concrete tower segment to an adjacent lower concrete tower segment every two or more segments. Even a single change in the wall thickness in the concrete tower portion from one concrete tower segment to another concrete tower segment, preferably a reduction from an upper concrete tower segment to an adjacent lower concrete tower segment, falls under the scope or the present subjet-matter.

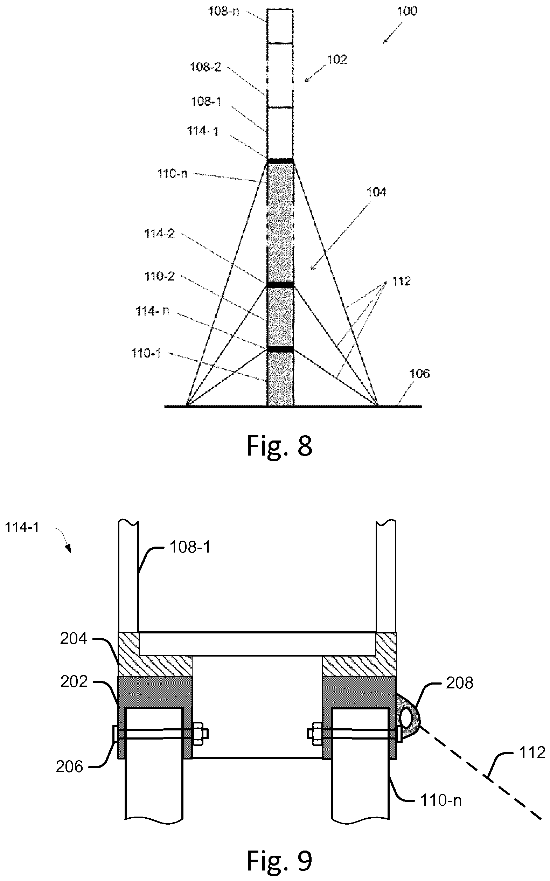

Another modification of the present embodiment is shown in Fig. 8. Contrary to the tower assembly shown in Fig. 1, the tower assembly shown in Fig. 8 has a steel tower portion 102 having an outer diameter which is almost identical to the outer diameter of the concrete tower portion 104. More precisely, the outer diameter of the steel tower portion 108-1 is slightly larger than the outer diameter of the concrete tower portion 110-n. Accordingly, the tower assembly constructed as shown in Fig. 8 has a more uniform outer shape.

In order to connect the steel tower portion 102 and the concrete tower portion 104, a transition segment 114-1 is constructed as shown in Fig. 9. Transition segment 114-1 according to the present modification of the embodiment basically comprises an L-shaped flange 204 and a U-shaped flange 202. The construction of the transition segment shown in Fig. 9 basically corresponds to the construction of the transition segment shown in Fig. 5 with the difference that the arrangement of the flanges 202 and 204 is inverted. Furthermore, contrary to the construction shown in Fig. 5, a concrete tower segment is mounted at the U-shaped flange 202 and the steel tower portion is mounted on the L-shaped flange 204.

Accordingly, it is possible to retrofit existing wind turbines onto a new tower assembly as described above without any modifications to the wind turbine generator, for instance. By using the above described enhanced tower assembly, it is possible to position the wind turbine at a greater height to extract a maximum kinetic energy from the incoming wind flow. Furthermore, the tower components can be manufactured cost effective and the erection of the tower assembly at the assembly site is also enhanced. By building the tower assembly from tower segments, the transportation of the parts for the tower assembly is convenient as the dimensions can be chosen in compliance with the regulations in different jurisdictions.

With the steel tower portion on top of a concrete tower portion, the costs of the tower are reduced. By using supporting means, a better handling of the bending moments of the tower is achieved so that the tower is structurally stronger. Since the supporting means, guy wires for instance, are provided outside of the concrete tower portion, a lesser extent of pre-stressing is required compared to constructions in which tensioning wires are incorporated in the concrete tower.

## Claims

1. Retrofitted wind turbine installation comprising
a newly constructed tower assembly (100) and
elements (101) demounted from an existing wind turbine installation,
**characterized in that** said new tower assembly (100) comprises
a concrete tower portion (104) having two or more concrete tower segments (110-1,...,110-n) arranged upon each other, wherein each of said two or more concrete tower segments (110-1,...,110-n) is a hollow segment, and
at least one supporting means (112) capable of receiving bending loads from said concrete tower portion (104), wherein said supporting means is connected to said concrete tower portion (104) at a predetermined height and is fixed to the ground (106) at a predetermined distance away from the concrete tower portion (104), wherein
the average wall thickness of a concrete tower segment of said two or more concrete tower segments (110-1,..., 110-n) is different from the average wall thickness of an adjacent upper concrete tower segment (...,110-n), wherein
the average wall thickness of a concrete tower segment of said two or more concrete tower segments (110-1,..., 110-n) is smaller than the average wall thickness of an adjacent upper concrete tower segment (...,110-n).

2. The retrofitted wind turbine installation according to claim 1, wherein
said elements demounted from an existing wind turbine installation comprise at least a nacelle (101) which accommodates a power generator coupled to a rotor hub carrying a blade assembly.

3. The retrofitted wind turbine installation according to claim 2, wherein
said elements demounted from an existing wind turbine installation further comprise at least a part of an existing tower assembly of said existing wind turbine installation.

4. The retrofitted wind turbine installation according to one of claims 1 to 3, wherein an adapting meansis provided for connecting said elements to said new tower assembly (100).

5. The retrofitted wind turbine installation according to one of the preceding claims, wherein each of said two or more concrete tower segments (110-1,...,110-n) have a constant outer diameter in its longitudinal direction.

6. The retrofitted wind turbine installation according to one of the preceding claims, further comprising one or more first transition segments (114-2) for connecting one of said two or more concrete tower segments (110-1,...,11 0-n) with another one of said two or more concrete tower segments (110-1,...,110-n).

7. The retrofitted wind turbine installation according to claim 6, wherein said one or more first transition segments (114-2) comprise a U-shaped flange (202) for accommodating an axial end of the upper one of two adjacent concrete tower segments (110-1,...,110-n) and a L-shaped flange (204) connectable to the lower one of the two adjacent concrete tower segments (110-1,...,110-n).

8. The retrofitted wind turbine installation according to one of the preceding claims, further comprising a steel tower portion (102) comprising one or more steel tower segments (108-1,...,108-n).

9. The retrofitted wind turbine installation according to claim 8, wherein said one or more steel tower segments (108-1,...,108-n) are circular in cross-section and have a constant outer diameter in the longitudinal direction.

10. The retrofitted wind turbine installation according to one of claims 8 and 9, wherein said outer diameter of said one or more steel tower segments (108-1,...,108-n) is identical to the outer diameter of the uppermost concrete tower segment (110-n) of said two or more concrete tower segments (110-1,...,110-n).

11. The retrofitted wind turbine installation according to one of claims 8 and 9, wherein said outer diameter of said one or more steel tower segments (108-1,...,108-n) is smaller than the outer diameter of the uppermost concrete tower segment (110-n) of said two or more concrete tower segments (110-1,...,110-n).

12. The retrofitted wind turbine installation according to one of claims 8 to 11, further comprising a second transition segment (114-1) for connecting the uppermost concrete tower segment (110-n) with the lowermost steel tower segment (108-1) of said steel tower portion (102).

13. The retrofitted wind turbine installation according to claim 12, wherein said second transition segment (114-1) comprises a U-shaped flange (202) for accommodating an axial end of the uppermost concrete tower segment (110-n) and a T-shaped or L-shaped flange (204) connectable to said lowermost steel tower segment (108-1) of said steel tower portion (102).

14. The retrofitted wind turbine installation according to one of claims 6, 9, 12 and 13, further comprising one or more connecting means (208) provided on the outer peripheral surface of one or more of said transition segments (114-1, 114-2) for connecting said one or more supporting means (112) to one or more of said transition segments (114-1, 114-2).

15. The retrofitted wind turbine installation according to claim 14, wherein three or more connecting means (208) are equidistantly provided on one or more of said transition segments (114-1, 114-2).

16. The retrofitted wind turbine installation according to one of the preceding claims, wherein said one or more supporting means (112) are a guy wire or guy tube or a combination thereof.

## Patentansprüche

1. Nachgerüstete Windturbinenanlage, aufweisend:
eine neu errichtete Turmanordnung (100) und
von einer bestehenden Windturbinenanlage abmontierte Elemente (101),
**dadurch gekennzeichnet, dass** die neue Turmanordnung (100) Folgendes aufweist:
einen Betonturmabschnitt (104) mit zwei oder mehr aufeinander angeordneten Betonturmsegmenten (110-1, ..., 110-n), wobei es sich bei jedem der zwei oder mehr Betonturmsegmente (110-1, ..., 110-n) um ein Hohlsegment handelt, und
mindestens ein Stützmittel (112), das in der Lage ist, Biegelasten vom Betonturmabschnitt (104) aufzunehmen, wobei das Stützmittel in einer vorbestimmten Höhe mit dem Betonturmabschnitt (104) verbunden und in einem vorbestimmten Abstand vom Betonturmabschnitt (104) am Boden (106) fixiert ist, wobei
die durchschnittliche Wanddicke eines Betonturmsegments der zwei oder mehr Betonturmsegmente (110-1, ..., 110-n) sich von der durchschnittlichen Wanddicke eines angrenzenden oberen Betonturmsegments (..., 110-n) unterscheidet, wobei
die durchschnittliche Wanddicke eines Betonturmsegments der zwei oder mehr Betonturmsegmente (110-1, ..., 110-n) geringer ist als die durchschnittliche Wanddicke eines angrenzenden oberen Betonturmsegments (..., 110-n) .

2. Nachgerüstete Windturbinenanlage nach Anspruch 1, wobei
die von einer bestehenden Windturbinenanlage abmontierten Elemente zumindest eine Gondel (101) aufweisen, in der ein Stromgenerator untergebracht ist, der mit einer eine Blattanordnung tragenden Rotornabe gekoppelt ist.

3. Nachgerüstete Windturbinenanlage nach Anspruch 2, wobei
die von einer bestehenden Windturbinenanlage abmontierten Elemente weiter zumindest einen Teil einer bestehenden Turmanordnung der bestehenden Windturbinenanlage aufweisen.

4. Nachgerüstete Windturbinenanlage nach einem der Ansprüche 1 bis 3, wobei ein Anpassungsmittel zum Verbinden der Elemente mit der neuen Turmanordnung (100) vorgesehen ist.

5. Nachgerüstete Windturbinenanlage nach einem der vorhergehenden Ansprüche, wobei jedes der zwei oder mehr Betonturmsegmente (110-1, ..., 110-n) in seiner Längsrichtung einen konstanten Außendurchmesser aufweist.

6. Nachgerüstete Windturbinenanlage nach einem der vorhergehenden Ansprüche, ferner aufweisend ein oder mehrere erste Übergangssegmente (114-2) zum Verbinden eines der zwei oder mehr Betonturmsegmente (110-1, ..., 110-n) mit einem anderen der zwei oder mehr Betonturmsegmente (110-1, ..., 110-n).

7. Nachgerüstete Windturbinenanlage nach Anspruch 6, wobei das eine oder die mehreren ersten Übergangssegmente (114-2) einen U-förmigen Flansch (202) zum Aufnehmen eines axialen Endes des oberen von zwei angrenzenden Betonturmsegmenten (110-1, ..., 110-n) und einen mit dem unteren der zwei angrenzenden Betonturmsegmente (110-1, ..., 110-n) verbindbaren L-förmigen Flansch (204) aufweisen.

8. Nachgerüstete Windturbinenanlage nach einem der vorhergehenden Ansprüche, ferner aufweisend einen Stahlturmabschnitt (102), der ein oder mehrere Stahlturmsegmente (108-1, ..., 108-n) aufweist.

9. Nachgerüstete Windturbinenanlage nach Anspruch 8, wobei das eine oder die mehreren Stahlturmsegmente (108-1, ..., 108-n) einen kreisförmigen Querschnitt sowie in Längsrichtung einen konstanten Außendurchmesser aufweisen.

10. Nachgerüstete Windturbinenanlage nach einem der Ansprüche 8 und 9, wobei der Außendurchmesser des einen oder der mehreren Stahlturmsegmente (108-1, ..., 108-n) mit dem Außendurchmesser des obersten Betonturmsegments (110-n) der zwei oder mehr Betonturmsegmente (110-1, ..., 110-n) identisch ist.

11. Nachgerüstete Windturbinenanlage nach einem der Ansprüche 8 und 9, wobei der Außendurchmesser des einen oder der mehreren Stahlturmsegmente (108-1, ..., 108-n) kleiner ist als der Außendurchmesser des obersten Betonturmsegments (110-n) der zwei oder mehr Betonturmsegmente (110-1, ..., 110-n).

12. Nachgerüstete Windturbinenanlage nach einem der Ansprüche 8 bis 11, ferner aufweisend ein zweites Übergangssegment (114-1) zum Verbinden des obersten Betonturmsegments (110-n) mit dem untersten Stahlturmsegment (108-1) des Stahlturmabschnitts (102).

13. Nachgerüstete Windturbinenanlage nach Anspruch 12, wobei das zweite Übergangssegment (114-1) einen U-förmigen Flansch (202) zum Aufnehmen eines axialen Endes des obersten Betonturmsegments (110-n) und einen mit dem untersten Stahlturmsegment (108-1) des Stahlturmabschnitts (102) verbindbaren T-förmigen oder L-förmigen Flansch (204) aufweist.

14. Nachgerüstete Windturbinenanlage nach einem der Ansprüche 6, 9, 12 und 13, ferner aufweisend ein oder mehrere Verbindungsmittel (208), die zum Verbinden des einen oder der mehreren Stützmittel (112) mit einem oder mehreren der Übergangssegmente (114-1, 114-2) auf der Außenumfangsfläche eines oder mehrerer der Übergangssegmente (114-1, 114-2) vorgesehen sind.

15. Nachgerüstete Windturbinenanlage nach Anspruch 14, wobei auf einem oder mehreren der Übergangssegmente (114-1, 114-2) drei oder mehr Verbindungsmittel (208) äquidistant vorgesehen sind.

16. Nachgerüstete Windturbinenanlage nach einem der vorhergehenden Ansprüche, wobei es sich bei dem einen oder den mehreren Stützmitteln (112) um ein Spannseil oder ein Spannrohr oder eine Kombination aus diesen handelt.

## Revendications

1. Installation d'éolienne rénovée, comprenant :
un ensemble de tour nouvellement construite (100) et
des éléments (101) démontés d'une installation d'éolienne existante,
**caractérisée en ce que** ledit nouvel ensemble de tour (100) comprend
une portion de tour en béton (104) ayant deux ou plus de deux segments de tour en béton (110-1,..., 110-n) disposé les uns au-dessus des autres, chacun desdits deux ou plus de deux segments de tour en béton (110-1,..., 110-n) étant un segment creux, et
au moins un moyen de support (112) capable de recevoir des charges de flexion depuis ladite portion de tour en béton (104), lesdits moyens de support étant connectés à ladite portion de tour en béton (104) à une hauteur prédéterminée et étant fixés au sol (106) à une distance prédéterminée de la portion de tour en béton (104),
l'épaisseur de paroi moyenne d'un segment de tour en béton desdits deux ou plus de deux segments de tour en béton (110-1,..., 110-n) étant différente de l'épaisseur de paroi moyenne d'un segment de tour en béton supérieur adjacent (..., 110-n), l'épaisseur de paroi moyenne d'un segment de tour en bétons desdits deux ou plus de deux segments de tour en béton (110-1,..., 110-n) étant inférieure à l'épaisseur de paroi moyenne d'un segment de tour en béton supérieur adjacent (..., 110-n).

2. Installation d'éolienne rénovée selon la revendication 1, dans laquelle
lesdits éléments démontés d'une installation d'éolienne existante comprennent au moins une nacelle (101) qui reçoit un générateur de puissance accouplé à un moyeu de rotor portant un ensemble de pales.

3. Installation d'éolienne rénovée selon la revendication 2, dans laquelle
lesdits éléments démontés d'une installation d'éolienne existante comprennent en outre au moins une partie d'un ensemble de tour existant de ladite installation d'éolienne existante.

4. Installation d'éolienne rénovée selon l'une des revendications 1 à 3, dans laquelle un moyen d'adaptation est prévu pour relier lesdits éléments audit nouvel ensemble de tour (100).

5. Installation d'éolienne rénovée selon l'une des revendications précédentes, dans laquelle chacun desdits deux ou plus de deux segments de tour en béton (110-1,..., 110-n) présente un diamètre extérieur constant dans sa direction longitudinale.

6. Installation d'éolienne rénovée selon l'une des revendications précédentes, comprenant en outre un ou plusieurs premiers segments de transition (114-2) pour relier l'un desdits deux ou plus de deux segments de tour en béton (110-1,..., 110-n) à un autre desdits deux ou plus de deux segments de tour en béton (110-1,..., 110-n).

7. Installation d'éolienne rénovée selon la revendication 6, dans laquelle lesdits un ou plusieurs premiers segments de transition (114-2) comprennent une bride en forme de U (202) pour recevoir une extrémité axiale du segment supérieur parmi deux segments de tour en béton adjacents (110-1,..., 110-n) et une bride en forme de L (204) pouvant être connectée au segment inférieur des deux segments de tour en béton adjacents (110-1,..., 110-n) .

8. Installation d'éolienne rénovée selon l'une quelconque des revendications précédentes, comprenant en outre une portion de tour en acier (102) comprenant un ou plusieurs segments de tour en acier (108-1,..., 108-n).

9. Installation d'éolienne rénovée selon la revendication 8, dans laquelle lesdits un ou plusieurs segments de tour en acier (108-1,..., 108-n) ont une section transversale circulaire et ont un diamètre extérieur constant dans la direction longitudinale.

10. Installation d'éolienne rénovée selon l'une des revendications 8 et 9, dans laquelle ledit diamètre extérieur desdits un ou plusieurs segments de tour en acier (108-1,..., 108-n) est identique au diamètre extérieur du segment de tour en béton le plus haut (110-n) desdits deux ou plus de deux segments de tour en béton (110-1,..., 110-n) .

11. Installation d'éolienne rénovée selon l'une des revendications 8 et 9, dans laquelle ledit diamètre extérieur desdits un ou plusieurs segments de tour en acier (108-1,..., 108-n) est inférieur au diamètre extérieur du segment de tour en béton le plus haut (110-n) desdits deux ou plus de deux segments de tour en béton (110-1,..., 110-n) .

12. Installation d'éolienne rénovée selon l'une des revendications 8 à 11, comprenant en outre un deuxième segment de transition (114-1) pour relier le segment de tour en béton le plus haut (110-n) au segment de tour en acier le plus bas (108-1) de ladite portion de tour en acier (102).

13. Installation d'éolienne rénovée selon la revendication 12, dans laquelle ledit deuxième segment de transition (114-1) comprend une bride en forme de U (202) pour recevoir une extrémité axiale du segment de tour en béton le plus haut (110-n) et une bride en forme de T ou en forme de L (204) pouvant être connectée audit segment de tour en acier le plus bas (108-1) de ladite portion de tour en acier (102).

14. Installation d'éolienne rénovée selon l'une des revendications 6, 9, 12 et 13, comprenant en outre un ou plusieurs moyens de connexion (208) prévus sur la surface périphérique extérieure d'un ou de plusieurs desdits segments de transition (114-1, 114-2) pour connecter lesdits un ou plusieurs moyens de support (112) à un ou plusieurs desdits segments de transition (114-1, 114-2).

15. Installation d'éolienne rénovée selon la revendication 14, dans laquelle trois ou plus de trois moyens de connexion (208) sont prévus de manière équidistante sur un ou plusieurs desdits segments de transition (114-1, 114-2).

16. Installation d'éolienne rénovée selon l'une quelconque des revendications précédentes, dans laquelle lesdits un ou plusieurs moyens de support (112) sont constitués par un fil de hauban ou un tube de hauban ou une combinaison de ceux-ci.
